# EUROPEAN PATENT APPLICATION

(11) **EP 1 727 127 A1**
(43) Date of publication of application: **29.11.2006**
(21) Application number: 06010210.0
(22) Date of filing: 17.05.2006
(51) Int. Cl.: G10L 13/02, H04M 1/60, H04M 1/663

(54) **Telephone with voice changer and control method and control program for the telephone**

(30) Priority: 26.05.2005 JP 2005153690
(71) Applicant: NEC CORPORATION, Minato-ku, Tokyo 108-8001 (JP)
(72) Inventor: Horikawa, Fumihiro, Tokyo 108-8001 (JP)
(74) Representative: Vossius & Partner

(57) **Abstract**

A telephone includes: a voice changer for converting the original voice of the user; an acquisition unit for acquiring information of the call-origin telephone at the time of an incoming call; a memory in which conditions for using the voice changer have been registered in advance; a determination unit for determining whether to use the voice changer based on information of the call-origin telephone that has been acquired by the acquisition unit and conditions that have been registered in the memory, and based on the result of determination, controlling the voice changer; and a switch unit for switching the state of use of the voice changer during a conversation.

## Description

The present invention relates to a telephone and a control method for the telephone, and more particularly to a telephone with a voice changing function capable of allowing a speaker to converse with a conversation partner while changing the speaker's voice as necessary, and to a control method for the telephone.

Fixed telephones or mobile telephones often receive annoying telephone calls such as solicitations. In such cases, when the user answers the call, the caller is able to make judgments regarding the user's age or gender based on the user's voice. If the user is young or female, the caller may attempt to take advantage of the user or otherwise to cause trouble for the user.

Devices such as mobile telephones are therefore provided with a function that realizes prescribed operations in the event of a call from predetermined telephone numbers.

For example, JP-A-H10-042036 discloses a mobile telephone that, in the event of an incoming call from a number that is to be denied termination and that has been registered in memory in advance, has a function for not ringing, a function for playing an automatic response message, or a function for cutting off communication immediately after automatically answering.

A telephone has also been proposed in which the user can converse with a caller while the voice of the user that is received by the mouthpiece of the telephone is converted in real time (for example, see JP-A-S63-067950).

With this telephone, the user, by manipulating a switch, can switch the tone of his or her voice, and a woman's voice can thus be transmitted to the caller sounding as if it were a man's voice. A woman can therefore use a rough voice to more easily turn down a solicitation.

A communication method has also been proposed that is blended with the "presence function" that uses "Push-to-Talk over Cellular" packet communication. In this communication method, a scheme, which uses conversation by nickname, is proposed in addition to a function that uses conversation by one's real name that has been used in a mobile telephone. This scheme is similar to anonymously chatting or contributing to a bulletin board system that is used on the Internet.

A mobile telephone of the prior art has a nuisance call prevention function for denying termination of specific numbers like the mobile telephone described in JP-A-H10-042036.

However, in a method in which the alert signal is not sounded or in which communication is automatically cut off, the caller may not realize that a setting has been made to deny connection, and in such cases, the caller may continue to call repeatedly. Such a method may therefore fail to prevent nuisance calls.

When the telephone described in JP-A-S63-067950 is used, the user, by manipulating a switch, is able to converse while altering his or her voice.

However, if the user first answers a call with his or her normal voice, the caller will determine information about the speaker such as the user's age or gender. The subsequent use of the switch to alter the user's voice will therefore be of little use. The user may of course use the switch from the start when responding to a call, but if the call is from an acquaintance of the user who is not making a nuisance call, there is a possibility for causing an awkward misunderstanding in which the acquaintance believes that he or she has mistaken the telephone number or address.

It is an object of the present invention to provide a telephone and control method that can detect an incoming call from a number that has been set in advance or an incoming call from a number or address that differs from permitted numbers or permitted addresses, and based on the result of this detection, automatically switch between use and non-use of a voice changer to effectively deal with nuisance telephone calls or anonymous calls.

To achieve the above-described object, the telephone according to the present invention converts the user's original voice and conveys this converted original vice to the caller, and comprises: a voice changer, an acquisition unit, a memory unit, and a determination unit. The voice changer converts the user's original voice. The acquisition unit acquires information of the call-origin telephone at the time of an incoming call. Conditions for using the voice changer are registered in advance in the memory. The determination unit determines whether to use the voice changer based on the information of the call-origin telephone that has been acquired by the acquisition unit and the conditions that have been registered in the memory, and based on these determination results, controls the voice changer.

As an effective form of the invention: telephone numbers are registered as conditions in the memory; the acquisition unit, at the time of an incoming call, acquires the telephone number of the call-origin telephone; and the determination unit, when the telephone number of the call-origin telephone that has been acquired by the acquisition unit is already registered in the memory, determines to use the voice changer and causes the voice changer to operate.

As an effective form of the invention: addresses are registered as conditions in the memory; the acquisition unit, at the time of an incoming call, acquires the address of the call-origin telephone; and the determination unit, when the address of the call-origin telephone that has been acquired by the acquisition unit is already registered in the memory, determines to use the voice changer and causes the voice changer to operate.

As an effective form of the invention: a telephone directory information memory is further included in which telephone numbers are registered as telephone directory information; said acquisition unit, at the time of an incoming call, acquires the telephone number of the call-origin telephone; a condition, which the telephone number of a call-origin telephone that has been acquired by the acquisition unit is still unregistered in the telephone directory information memory, is registered as the condition in the memory; and the determination unit, when the telephone number of a call-origin telephone that has been acquired by the acquisition unit corresponds to the condition that is registered in the memory unit, determines to use the voice changer and causes the voice changer to operate.

As an effective form of the invention: a telephone directory information memory is further included in which addresses are registered as telephone directory information; said acquisition unit, at the time of an incoming call, acquires the address of the call-origin telephone; a condition, which the address of a call-origin telephone that has been acquired by the acquisition unit is still unregistered in the telephone directory information memory, is registered as the condition in the memory; and the determination unit, when the address of the call-origin telephone that has been acquired by the acquisition unit corresponds to the condition that is registered in the memory, determines to use the voice changer and causes the voice changer to operate.

As an effective form of the invention: a condition, which the telephone number of a call-origin telephone is not reported, is registered as the condition in the memory; the acquisition unit, at the time of an incoming call, acquires the telephone number of the call-origin telephone; and the determination unit, when the acquisition unit has acquired an indication that the telephone number of the call-origin telephone is not reported, determines to use the voice changer and causes the voice changer to operate.

Further, as an effective form of the invention: a condition, which the address of a call-origin telephone is not reported, is registered as the condition in the memory; the acquisition unit, at the time of an incoming call, acquires the address of the call-origin telephone; and the determination unit, when the acquisition unit has acquired an indication that the address of the call-origin telephone is not reported, determines to use the voice changer and causes the voice changer to operate.

Further, as an effective form of the invention: this telephone includes a switch unit for switching the state of use of the voice changer during a conversation.

Further, as an effective form of the invention: this telephone further includes a receiver speaker that is connected to the voice changer for supplying the voice of the communication partner that has been converted by the voice changer.

According to the present invention, a voice that has been converted by the voice changer is sent to the communication partner. As a result, information such as the age or gender of the user can be concealed. As an example, when the voice of a woman user is converted to a lower tone and the lower tone then conveys to the conversation partner, the conversation partner may easily mistake the user for a man. A woman user can therefore easily reject an annoying telephone call such as a solicitation.

In addition, at the time of an incoming call, the determination unit automatically switches between use and non-use of the voice changer in accordance with conditions such as the telephone number of the call-origin telephone, the address of the call-origin telephone, or a condition of some other category. As a result, the user can make appropriate use of the voice changer from the start of the conversation.

Further, even when indication has not been set for use of the voice changer, it is possible to switch to a setting for using the voice changer during a conversation. Thus, when for example a situation occurs in which the user encounters problems dealing with a caller during a conversation, the user can end the annoying call by giving the caller the false impression that the call has been transferred to a third person who is with the user. This function can also be used simply for the entertainment value of converting one's speaking voice when talking with a friend. This method of use can increase the enjoyment of a conversation.

The above and other objects, features, and advantages of the present invention will become apparent from the following description with reference to the accompanying drawings which illustrate an example of the present invention.
FIG. 1 is a block diagram showing the configuration of a working example of a telephone provided with voice changer according to the present invention;
FIG. 2 is a flow chart explaining an example of the control method of the telephone of the present invention; and
FIG. 3 is a block diagram showing the configuration of another working example of the telephone according to the present invention.

### Embodiment 1

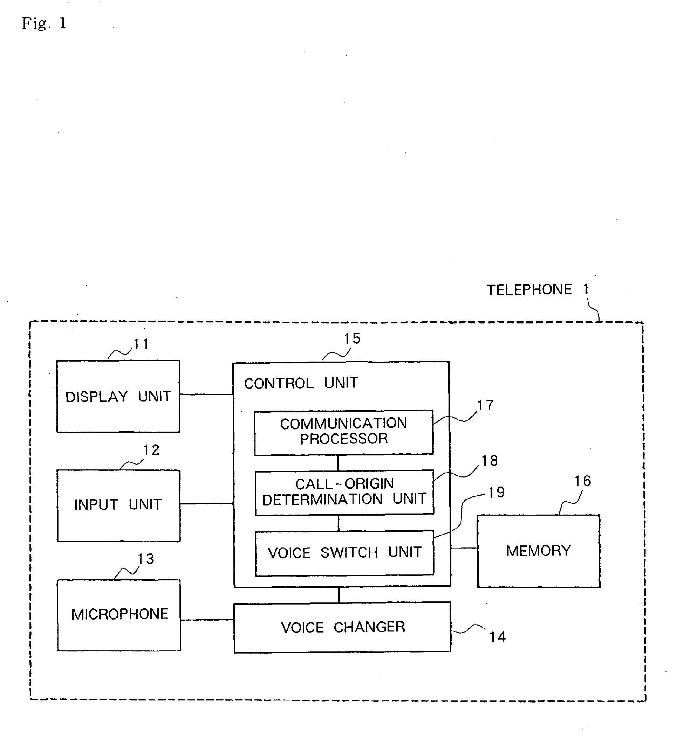

FIG. 1 shows a schematic view of the configuration of the first embodiment of the telephone according to the present invention.

Telephone 1 is, for example, a mobile telephone, and comprises at least: display unit 11 such as an LCD; input unit 12 such as input keys; microphone 13 for acquiring the voice of the user of telephone 1; voice changer 14; control unit 15; and memory 16 for registering conditions for the use of voice changer 14. Control unit 15 is operated by a program, and comprises at least communication processor 17; call-origin determination unit 18; and voice switch unit 19.

Although not shown in the figure, telephone 1 comprises other necessary functions, such as a speaker for supplying the incoming call alert and the voice of the communication partner, and a function that registers a telephone directory. In addition, telephone 1 registers, for example, telephone directory information in memory 16. The telephone directory information may be telephone numbers, addresses, or telephone numbers and addresses. Telephone 1 may be further provided with data communication processing capabilities for realizing, for example, electronic mail and web browsing.

Upon detecting an incoming call, communication processor 17 of control unit 15 extracts the call-origin telephone number or the call-origin address that is contained in an incoming signal. Communication processor 17 then displays the call-origin telephone number or call-origin address on display unit 11, and reports the call-origin telephone number or call-origin address to call-origin determination unit 18.

Call-origin determination unit 18 refers to memory 16 based on the call-origin telephone number or the call-origin address, and determines whether the call-origin telephone number or the call-origin address corresponds to conditions for the use of voice changer 14. Call-origin determination unit 18 then reports the results of this determination to voice switch unit 19.

Voice switch unit 19 switches voice changer 14 ON and OFF based on this report. Voice switch unit 19 further switches voice changer 14 ON/OFF upon receiving instructions through the manipulation of input unit 12 by the user of telephone 1.

Voice changer 14 electrically converts the voice that has been received as input, thereby converting the characteristics of the voice. Voice changer 14 comprises, for example, AD/DA converter and a write buffer. In this case, voice changer 14 changes the frequency of writing to write buffer and the frequency of reading from the write buffer to change the tone of the input voice.

The voice changer itself is of a known technology that has been put to practical use by a variety of methods. Any of these known techniques may be adopted as voice changer 14. For example, voice changer 14 may be constituted by hardware, or voice changer 14 that is realized by software may be incorporated in control unit 15. In addition, in the standpoint of the prevention of nuisance calls, voice changer 14 is preferably set to change the user's voice to a lower tone. However, voice changer 14 may also allow setting by the manipulation of input unit 12 such that a low voice is converted to a higher tone, or may allow setting such that the conversed tone is a number of levels.

Memory 16 registers ON/OFF information that shows whether voice changer 14 is to be used or not, and information of telephone numbers or addresses for which voice changer 14 is to be used.

The information is registered in memory 16 as described below.

When input unit 12 is operated in a prescribed manner by a user, control unit 15 displays a menu screen on display unit 11. In accordance with the menu screen, the user, for example, directly enters the call-origin telephone numbers and call-origin addresses for which voice changer 14 is to be used, or selects call-origin telephone numbers and call-origin addresses for which voice changer 14 is to be used from prescribed categories or groups that are indicated by the telephone directory information that is registered in memory 16.

Categories that can be used include "cases in which the call-origin telephone number or call-origin address is not registered as telephone directory information," "cases in which the call-origin telephone number and the call-origin address are not reported," and "a case of a public telephone." This setting information (conditions for the use of voice changer 14) is registered in memory 16.

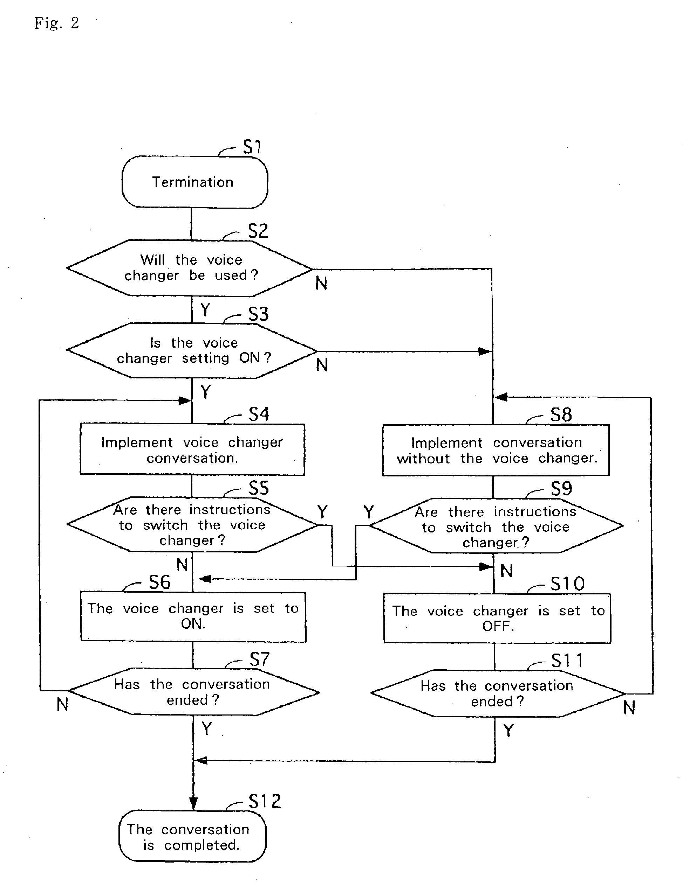

Using the flow chart of FIG. 2, explanation next regards the termination operations of the thus-constituted telephone 1.

In step S1, when telephone 1 receives an incoming call, communication processor 17 detects the incoming call.

In step S2, communication processor 17 reports the call-origin telephone number information or call-origin address that is contained in the incoming signal to call-origin determination unit 18. Call-origin determination unit 18 uses the call-origin telephone number information or the call-origin address in order to refer to memory 16 and determines whether voice changer 14 is to be used or not.

According to the content of settings that are registered in memory 16, call-origin determination unit 18 determines that voice changer 14 is to be used when the call-origin telephone number or call-origin address is a telephone number or address, which is targeted for voice changer use, that has been registered in advance, when the call-origin telephone number or call-origin address is not registered in the telephone directory, or when the incoming call is from a call-origin telephone number that is not reported or from a call-origin address that is not reported.

In step S3, when the call-origin telephone number or call-origin address is a number or address for which voice changer 14 is to be used, call-origin determination unit 18 checks the ON/OFF information of voice changer 14 that is registered in memory 16.

In step S4, when the ON/OFF information of voice changer 14 indicates state of ON in memory 16, voice changer conversation is executed.

In this case, in step S6 voice switch unit 19 of control unit 15 sets voice changer 14 to ON. When voice changer 14 is set to ON, the user's voice in this mode is converted, by voice changer 14, and this converted voice is transmitted from communication processor 17 to the partner.

If the user wishes to terminate the use of voice changer 14 during the conversation, the user performs prescribed input to input unit 12 (for example, pressing a voice change switch button).

When input unit 12 receives this prescribed input in step S5, in step S6 voice switch unit 19 of control unit 15 switches voice changer 14 to OFF, following which voice changer 14 turns OFF.

In step S7 or S11 and step S12, this state continues until the conversation ends.

Receiver speaker (not shown) preferably supplies the user's conversed voice such that the user can verify his or her own conversed voice that is conveyed to the conversation partner.

In addition, when a voice-changed conversation is carried out at the time of call incoming, display unit 11 preferably displays an indication of this state.

In contrast, in step S2: "N", when the call-origin telephone number or call-origin address that has been detected by communication processor 17 is not a telephone number or address that is targeted for using voice changer 14, or in step S3: "N", when the ON/OFF information of voice changer 14 indicates state of OFF, in step S8, conversation is executed without using voice changer 14.

In this case, in step S10, voice switch unit 19 sets voice changer 14 to OFF, and the user's speaking voice is transmitted to the partner without tone conversion.

When the user wishes to use voice changer 14 midway through a conversation, the user performs prescribed input to input unit 12 (for example, pressing the voice change switch button).

When input unit 12 receives this prescribed input in step S9, in step S6, voice switch unit 19 of control unit 15 switches voice changer 14 ON, following which voice changer 14 turns ON.

In step S7 or S11 and step S12, This state then continues until the end of the conversation.

As described in the foregoing explanation, according to the present invention, at the time of an incoming call, control unit 15 determines whether the call-origin telephone number or call-origin address corresponds to a condition that has been registered in advance in memory 16.

When the call-origin telephone number or call-origin address corresponds to a condition that has been registered in advance in memory 16, and moreover, when the ON/OFF information of voice changer 14 indicates state of ON, control unit 15 causes voice changer 14 to operate, the user's voice is converted, and this converted voice is transmitted to the conversation partner. In this way, for example, a woman's high voice is conveyed to the conversation partner as a low voice. As a result, a woman can effectively deal with an annoying call.

On the other hand, when voice changer 14 has not been set for use, the setting of voice changer 14 can be switched during the conversation. As a result, if a situation develops during a conversation in which the user finds the caller a nuisance, the user can give the caller the false impression that the user has handed off the telephone to a third person that is with the user.

It is further possible to switch the setting of the voice changer to OFF during a voice-changed conversation, whereby the user can give the conversation partner the false impression that the user has again taken the telephone from the above-described (fictional) third person. These functions may also be used for changing one's speaking voice simply for entertainment, such as when conversing with friends or when conversing anonymously.

### Embodiment 2

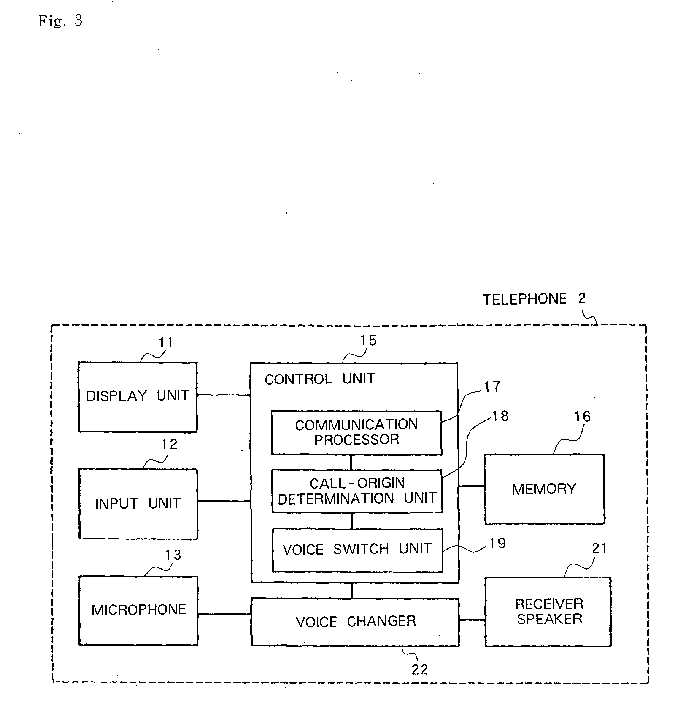

FIG. 3 is a figure showing the configuration of the second embodiment of the telephone according to the present invention.

As shown in FIG. 3, in telephone 2 of the present embodiment, receiver speaker 21 is connected to voice changer 22. Thus, by changing the setting of voice changer 22, the user can be entertained by changing the voice of the communication partner by means of voice changer 22. This setting is assumed to be registered in memory 16 by way of input unit 12. When the voice changer is set to ON, the received voice signal is converted by voice changer 22, whereby receiver speaker 21 supplies voice according to the converted voice signal. The other capabilities of this telephone 2 are the same as for telephone 1 shown in FIG. 1, and redundant explanation is here omitted.

Although explanation has been presented above regarding embodiments of the present invention, the technical scope of the present invention is not in any way limited to these embodiments, and the present invention can be realized as various other modifications within the scope and spirit described in the claims.

For example, telephone 1 may be not only a mobile telephone, but may also be a fixed telephone that is installed in, for example, a typical household.

According to the present invention, voice that has been converted by the voice changer is sent to the communication partner. The present invention therefore has the advantage of allowing information such as the user's age and gender to be concealed.

For example, if the voice of a female user is converted to a lower tone and this lower voice then conveys to the conversation partner, the conversation partner can be given the impression that the user is a man, and the present invention therefore has the advantage of enabling a woman user to easily reject annoying calls such as solicitations.

Further, control unit 15 automatically switches between the use or non-use of the voice changer at the time of an incoming call in accordance with the call-origin telephone number, the call-origin address, or a category of telephone numbers and addresses, whereby the voice changer can be used appropriately from the start of a conversation.

The voice changer-equipped telephone and control method according to the present invention, the ON/OFF control of the voice changer is determined automatically according to the call-origin telephone number or call-origin address. As a result, nuisance calls can be effectively rejected, and a variety of communication environments can be provided through trouble-free anonymous communication. The voice changer-equipped telephone and control method according to the present invention will therefore be of use in the communication and telephone industries.

While a preferred embodiment of the present invention has been described using specific terms, such description is for illustrative purposes only, and it is to be understood that changes and variations may be made without departing from the spirit or scope of the following claims.

## Claims

1. A telephone for converting a user's original voice and conveying this converted original voice to a conversation partner; said telephone comprising:
a voice changer for converting the original voice of said user;
an acquisition unit for acquiring information of a call-origin telephone at a time of an incoming call;
a memory in which conditions for using said voice changer are registered in advance; and
a determination unit for determining whether to use said voice changer based on information of the call-origin telephone that has been acquired by said acquisition unit and conditions that have been registered in said memory, and for controlling said voice changer based on these determination results.

2. The telephone according to claim 1, wherein:
telephone numbers are registered as said conditions in said memory;
said acquisition unit, at the time of an incoming call, acquires the telephone number of said call-origin telephone; and
said determination unit, when the telephone number of said call-origin telephone that has been acquired by said acquisition unit is already registered in said memory, determines to use said voice changer and causes said voice changer to operate.

3. The telephone according to claim 1 or 2, wherein:
addresses are registered as said conditions in said memory;
said acquisition unit, at the time of an incoming call, acquires the address of the call-origin telephone; and
said determination unit, when the address of said call-origin telephone that has been acquired by said acquisition unit is already registered in said memory, determines to use said voice changer and causes said voice changer to operate.

4. The telephone according to claim 1, 2 or 3, further comprising:
a telephone directory information memory in which telephone numbers are registered as telephone directory information;
wherein:
said acquisition unit, at the time of an incoming call, acquires the telephone number of said call-origin telephone;
a condition that the telephone number of a call-origin telephone that has been acquired by said acquisition unit is still unregistered in said telephone directory information memory is registered as said condition in said memory; and
said determination unit, when the telephone number of a call-origin telephone that has been acquired by said acquisition unit corresponds to the condition that is registered in said memory, determines to use said voice changer and causes said voice changer to operate.

5. The telephone according to claim 1, 2, 3 or 4, further comprising:
a telephone directory information memory in which addresses are registered as telephone directory information;
wherein:
said acquisition unit, at the time of an incoming call, acquires the address of said call-origin telephone;
a condition that the address of a call-origin telephone that has been acquired by said acquisition unit is still unregistered in said telephone directory information memory is registered as said condition in said memory; and
said determination unit, when the address of a call-origin telephone that has been acquired by said acquisition unit corresponds to the condition that is registered in said memory, determines to use said voice changer and causes said voice changer to operate.

6. The telephone according to claim 1, 2, 3, 4 or 5, wherein:
a condition that the telephone number of a call-origin telephone is not reported is registered as said condition in said memory,
said acquisition unit, at the time of an incoming call, acquires the telephone number of said call-origin telephone; and
said determination unit, when said acquisition unit has acquired an indication that the telephone number of said call-origin telephone is not reported, determines to use said voice changer and causes said voice changer to operate.

7. The telephone according to any one of claims 1 to 6, wherein:
a condition that the address of a call-origin telephone is not reported is registered as said condition in said memory;
said acquisition unit, at the time of an incoming call, acquires the address of said call-origin telephone; and
said determination unit, when said acquisition unit has acquired an indication that the address of said call-origin telephone is not reported, determines to use said voice changer and causes said voice changer to operate.

8. The telephone according to any one of claims 1 to 7, further comprising a switch unit for switching the state of use of said voice changer during a conversation.

9. The telephone according to any one of claims 1 to 8, further comprising a receiver speaker that is connected to said voice changer for supplying the voice of the communication partner that has been converted by said voice changer.

10. A control method performed by a telephone that includes a voice changer for converting an original voice of a user, said control method comprising the steps of:
acquiring information of a call-origin telephone at a time of an incoming call;
based on the information of said call-origin telephone, referring to a memory in which conditions for using said voice changer have been registered in advance to determine whether to use said voice changer; and
upon determining to use said voice changer, converting the original voice of the user of the telephone and transmitting this converted original voice to a conversation partner.

11. The control method according to claim 10, further comprising the step of:
switching state of use of said voice changer upon receiving prescribed input from the user during a conversation.

12. A control program that is installed in a telephone that includes a voice changer for converting an original voice of a user; said control program causing said telephone to execute the steps of:
acquiring information of a call-origin telephone at a time of an incoming call to said telephone;
based on the information of said call-origin telephone, referring to a memory in which conditions for using said voice changer have been registered in advance to determine whether to use said voice changer; and
upon determining to use said voice changer, converting the original voice of the user of the telephone and transmitting this converted original voice to a conversation partner.

13. The program according to claim 12 for causing said telephone to further execute the step of:
switching a state of use of said voice changer upon receiving prescribed input from the user during a conversation on said telephone.
